(19) Europäisches Patentamt
European Patent Office
Office européen des brevets

(11) **EP 4 545 505 A1**

(12) **EUROPEAN PATENT APPLICATION**
published in accordance with Art. 153(4) EPC

(43) Date of publication:
**30.04.2025 Bulletin 2025/18**

(21) Application number: **23827096.1**

(22) Date of filing: **14.06.2023**

(51) International Patent Classification (IPC):
*C04B 35/80* (2006.01)

(52) Cooperative Patent Classification (CPC):
**C04B 35/117; C04B 35/185; C04B 35/80**

(86) International application number:
**PCT/JP2023/022159**

(87) International publication number:
**WO 2023/248910 (28.12.2023 Gazette 2023/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.06.2022 JP 2022099341**

(71) Applicant: **Tosoh Corporation**
**Yamaguchi 746-8501 (JP)**

(72) Inventors:
• **HIRATAKA, Yo**
  **Ayase-shi Kanagawa 252-1123 (JP)**
• **NAWATA, Yushi**
  **Ayase-shi Kanagawa 252-1123 (JP)**
• **OHTA, Ikuya**
  **Ayase-shi Kanagawa 252-1123 (JP)**
• **YAMASHITA, Isao**
  **Ayase-shi Kanagawa 252-1123 (JP)**

(74) Representative: **Hoffmann Eitle**
**Patent- und Rechtsanwälte PartmbB**
**Arabellastraße 30**
**81925 München (DE)**

(54) **CERAMIC-MATRIX COMPOSITE MATERIAL AND PRODUCTION METHOD THEREFOR**

(57) Provided is at least one of a ceramic matrix composite and a method for producing the same. The ceramic matrix composite is one in which a reduction in strength due to high temperature exposure is inhibited because of a new ceramic matrix provided therein. A ceramic matrix composite comprises a ceramic matrix and a continuous ceramic fiber. The ceramic matrix comprises an aluminum-containing composite oxide and an oxide that has a composition different from the composition of the composite oxide.

FIG. 1

Alumina
Mullite

2 µm

Processed by Luminess, 75001 PARIS (FR)

EP 4 545 505 A1

**Description**

TECHNICAL FIELD

The present disclosure relates to a ceramic matrix composite and a method for producing the same.

BACKGROUND ART

Ceramic composite materials (hereinafter also referred to as "CMC") formed of a continuous ceramic fiber and a ceramic matrix are attracting attention as high-temperature structural materials, because of their high strength, in particular, high high-temperature strength, compared to other composite materials, such as polymeric composite materials. However, when CMCs have undergone exposure to a high-temperature atmosphere (hereinafter also referred to as "high temperature exposure"), they experience aging degradation and, as a result, have reduced strength. Various studies have been reported regarding inhibiting the aging degradation to improve post-high-temperature-exposure strength.

For example, there is a report that compositing a ceramic matrix with a surface-modified continuous ceramic fiber improves the post-high-temperature-exposure strength of CMCs (Patent Document 1). Furthermore, a study has been reported regarding providing a modified alumina portion in a gap between a ceramic matrix and a continuous ceramic fiber to enhance a density of the ceramic matrix, thereby improving strength (Patent Document 2). Furthermore, Non-Patent Document 1 reports a study regarding a behavior of a CMC in a heat treatment. The CMC is one in which a ceramic matrix, which is made of an alumina that contains added silica, is composited with a continuous fiber made of alumina and mullite.

PRIOR ART DOCUMENTS

PATENT DOCUMENTS

Patent Document 1: WO-A-2022/071218
Patent Document 2: WO-A-2021/193817

NON PATENT DOCUMENT

Non Patent Document 1: J. Euro. Ceram. Soc., 24 (2004) 565-578

DISCLOSURE OF INVENTION

TECHNICAL PROBLEM

Patent Document 1 discloses improving the post-high-temperature-exposure strength of a CMC by modifying the continuous ceramic fiber but does not discuss the ceramic matrix. Furthermore, in the case of the CMCs disclosed in Patent Document 2 and Non-Patent Document 1, the effect of inhibiting a reduction in the strength due to high temperature exposure is small, and, in particular, when the exposure lasts for a long time, the post-high-temperature-exposure strength significantly decreases.

An object of the present disclosure is to provide at least one of a ceramic matrix composite and a method for producing the same. The ceramic matrix composite is one in which a reduction in strength due to high temperature exposure is inhibited because of a new ceramic matrix provided therein.

SOLUTION TO PROBLEM

The present inventors focused their attention on the components that form the ceramic matrix. As a result, it was discovered that when the ceramic matrix is made of multiple components and includes a specific composite oxide, degradation in the strength of CMCs due to high temperature exposure is significantly inhibited.

Specifically, the present invention is as described in the Claims, and a summary of the present disclosure is as follows.

[1] A ceramic matrix composite comprising: a ceramic matrix comprising an aluminum-containing composite oxide and an oxide that has a composition different from the composition of the composite oxide; and a continuous ceramic fiber.

[2] The ceramic matrix composite according to [1], wherein the composite oxide is at least one selected from the group of spinel, mullite and YAG.

[3] The ceramic matrix composite according to [1] or [2], wherein the oxide comprises alumina.

[4] The ceramic matrix composite according to any one of [1] to [3], wherein a content of the composite oxide in the ceramic matrix is 0.5 mass% or greater and 80 mass% or less.

[5] The ceramic matrix composite according to any one of [1] to [4], wherein the continuous ceramic fiber is at least one selected from the group of continuous alumina fibers, continuous mullite fibers and continuous mixed alumina-mullite fibers.

[6] The ceramic matrix composite according to any one of [1] to [5], wherein a fiber volume fraction is 30 vol.% or greater and 60 vol.% or less.

[7] The ceramic matrix composite according to any one of [1] to [6], wherein a measured density is 2.0 $g/cm^3$ or greater and 3.2 $g/cm^3$ or less.

[8] A method for producing the ceramic matrix composite according to any one of [1] to [7], the method comprising the steps of: preparing a mixture by mixing a slurry with the continuous ceramic fiber, the slurry including an aluminum-containing composite oxide source and an oxide source that has a composition different from the composition of the composite oxide source; solidifying the mixture to form a green body; and firing the green body.

[9] The production method according to [8], wherein a ratio of an average particle size of the composite oxide source to an average particle size of the oxide source is 0.01 or greater and 1.2 or less.

[10] The production method according to [8] or [9], wherein the composite oxide source is at least one selected from the group of spinel, mullite and YAG.

[11] A component comprising the ceramic matrix composite according to any one of [1] to [7].

ADVANTAGEOUS EFFECTS OF INVENTION

The present disclosure can provide at least one of a ceramic matrix composite and a method for producing the same. The ceramic matrix composite is one in which a reduction in strength due to high temperature exposure is inhibited because of a new ceramic matrix provided therein.

BRIEF DESCRIPTION OF DRAWINGS

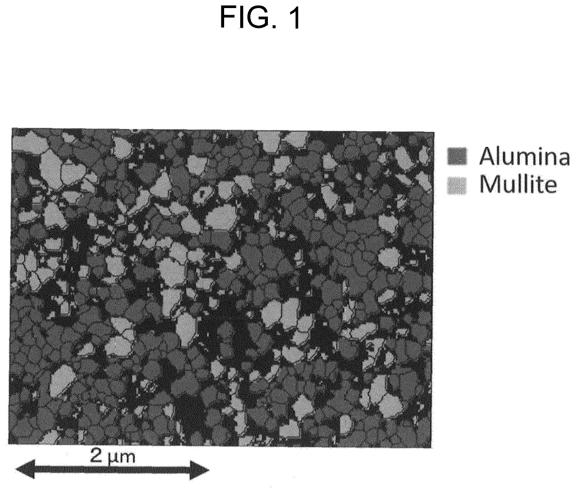

[Fig. 1] An EBSD crystal phase mapping of a CMC of Example 1.

DESCRIPTION OF EMBODIMENTS

A continuous ceramic fiber of the present disclosure will be described with reference to an example of an embodiment. Terms used in the present embodiment are defined as follows.

A "ceramic matrix composite " (CMC) is a material in which a continuous ceramic fiber and a ceramic matrix are composited together and is a so-called ceramic-fiber-reinforced ceramic.

A "ceramic matrix" is a ceramic that serves as a CMC matrix (base phase). The ceramic matrix is a CMC matrix (base phase) formed essentially of ceramic grains (hereinafter also simply referred to as "grains").

A "ceramic fiber" is a spun polycrystalline ceramic or a string-shaped polycrystalline ceramic and is a fiber formed of grains. Ceramic fibers can be classified by their fiber length into "short ceramic fibers" and "continuous ceramic fibers". In the present embodiment, a "short ceramic fiber" is a ceramic fiber having a fiber length of less than 500 $\mu$m, and a "continuous ceramic fiber" is a ceramic fiber other than the short ceramic fiber (ceramic fiber having a fiber length of 500 $\mu$m or greater). Furthermore, a "mixed ceramic fiber" is a ceramic fiber having a mixed microstructure including two or more types of ceramic grains, and a "continuous mixed ceramic fiber" is a continuous ceramic fiber having a mixed microstructure including two or more types of ceramic grains.

A "fiber bundle" is an assembly of two or more individual ceramic fibers.

A "ceramic fiber cloth" is a woven fabric made from a ceramic fiber, in particular, a woven fabric made from a continuous ceramic fiber. The ceramic fiber cloth may be a woven fabric made from fiber bundles of a continuous ceramic fiber, that is, may be a continuous ceramic fiber in the form of intertwined fiber bundles.

An "average particle size" is a median size ($D_{50}$) in a volume particle size distribution of a powder as measured by a wet process.

A "BET specific surface area" is a BET specific surface area that is measured in accordance with JIS Z 8830 and can be measured with a BET single-point method that uses a carrier gas process in which nitrogen is used as the adsorption gas. Examples of specific conditions for measuring the BET specific surface area include the following conditions.

Adsorption medium: $N_2$
Adsorption temperature: -196°C
Pretreatment conditions: treatment in air at 200°C for 30 minutes

A "fiber volume fraction" is a volume ratio of the continuous ceramic fiber in the CMC and is an average of several volume fractions ($V_f$) [vol.%] that can be determined from scanning electron microscope (hereinafter also referred to as an "SEM") images of the CMC. Each of the several fiber volume fractions ($V_f$) can be determined according to equation (1) below.

$$V_f = A_f/(A_f + A_m) \times 100 \qquad (1)$$

In equation (1), $A_f$ is an area [$m^2$] of the continuous ceramic fiber in the SEM image, and $A_m$ is an area [$m^2$] of the ceramic matrix in the SEM image. The $A_f$ and the $A_m$ can be determined by binarizing the SEM image and performing image analysis thereon by using image analysis software (e.g., ImageJ, manufactured by the National Institutes of Health). Regarding the binarization, the binarization of the SEM image can be performed by using common image analysis software (e.g., ImageJ, manufactured by the National Institutes of Health).
The fiber volume fraction ($V_{f-ave}$) can be determined as an average of $V_f$'s determined from $10 \pm 5$ SEM images.
The SEM images can be obtained through SEM observation that is performed by using a common scanning electron microscope (e.g., JSM-7600F, manufactured by Jeol Ltd.) under the following conditions.

Acceleration voltage: 5 kV
Magnification: 130×

The SEM observation can be initiated as follows. An 8 mm × 6 mm rectangular plate-shaped piece is cut from the CMC with a diamond cutter. Subsequently, the surface (cut surface) that has been exposed by the cutting is processed with a cross section polisher, then, gold (Au) is vapor-deposited onto the processed cut surface, and the resulting surface is used as the observation surface.
A "measured density" is a density determined with a method that is in accordance with JIS R 1634, and the density is determined as a ratio [$g/cm^3$] of a volume measured by an Archimedes method to a mass measured with an electronic balance.
An "average grain size" is an average of grain sizes of a composite oxide present in the CMC and is a value measured by the following method.
First, EBSD observation is performed with a common electron backscatter diffractometer (e.g., Symmetry, manufactured by Oxford Instruments) under the following conditions to acquire EBSD observation data.

Acceleration voltage: 30 kV
Exposure time: 3 ms
Magnification: 30,000×
Working distance: 8 mm
Step size: 20 nm
Measurement range: 3.26 μm × 4.34 μm

Next, the acquired EBSD observation data are analyzed with common analysis software (e.g., AZtecCrystal, manufactured by Oxford Instruments) under the following conditions to determine equivalent circular diameters of grains of the composite oxide, and the equivalent circular diameters are designated as the grain sizes of the composite oxide. The average grain size can be determined as an average of the grain sizes.

Misorientation angle: 5°
Number of grains: $100 \pm 50$

The sample for the EBSD observation can be prepared as follows. A 10 mm × 6 mm rectangular plate-shaped piece is cut from the CMC with a diamond cutter, then, the surface (cut surface) that has been exposed by the cutting is processed with a cross section polisher, and subsequently, FIB processing is performed on the piece at an acceleration voltage of 30 kV. The surface (cut surface) that has undergone the FIB processing can be used as the observation surface.
A "coefficient of variation (CV) in the grain size" represents a variation in the grain size of the composite oxide present in the CMC and is a value determined by dividing a standard deviation in the grain size by the average grain size.
A "composite oxide content" is a content (mass%) of the composite oxide in the ceramic matrix and is a value determined by image analysis of SEM-EDS images of the ceramic matrix in the CMC. Specifically, first, SEM-EDS observation is performed under the following conditions with a common scanning electron microscope (e.g., JSM-7600F, manufactured by Jeol Ltd.) and a common energy dispersive X-ray spectroscope (e.g., NSS312E + UltraDry 30 mm$^2$, manufactured by Thermo Fisher Scientific) to obtain SEM-EDS images. The SEM-EDS observation can be performed on an observation surface prepared in a manner similar to that of the above-described SEM observation.

Acceleration voltage: 5 kV
Magnification: 20,000×

Next, binarization and image analysis are performed on the obtained SEM-EDS images by using common image analysis software (e.g., ImageJ, manufactured by the National Institutes of Health), and a content ($C_c$) of the composite oxide is determined for each of the SEM-EDS images according to equation (2) below.

$$C_C = [(A_C \times d_C)/\{(A_C \times d_C) + (A_O \times d_O)\}] \times 100 \quad (2)$$

In the equation, $C_c$ is the composite oxide content [mass%], $A_c$ is an area [m$^2$] of the composite oxide in the SEM-EDS image, $d_c$ is a true density [g/m$^3$] of the composite oxide, $A_o$ is an area [m$^2$] of an oxide in the SEM-EDS image, and $d_o$ is a true density [g/m$^3$] of a matrix oxide, which will be described later. $A_c$ and $A_o$ are values determined by image analysis of the SEM-EDS images.

If the composite oxide is a plurality of composite oxides, and/or the matrix oxide is a plurality of matrix oxides, the following values can be used for $A_c \times d_c$ and $A_o \times$ do in equation (2).

$$A_C \times d_C = A_{C1} \times d_{C1} + A_{C2} \times d_{C2} + ... + A_{Cn} \times d_{Cn} \quad (2\text{-}1)$$

$$A_O \times d_O = A_{O1} \times d_{O1} + A_{O2} \times d_{O2} + ... + A_{Om} \times d_{Om} \quad (2\text{-}2)$$

In equations (2-1) and (2-2), $A_{Cn}$ and $d_{Cn}$ are the area [m$^2$] and the true density [g/m$^3$], respectively, of a composite oxide included in the matrix, and $A_{Om}$ and $d_{Om}$ are the area [m$^2$] and the true density [g/m$^3$], respectively, of a matrix oxide included in the matrix. Examples of the true density are as follows: $3.98 \times 10^6$ g/m$^3$ for spinel, $3.11 \times 10^6$ g/m$^3$ for mullite, $4.55 \times 10^6$ g/m$^3$ for YAG and $3.98 \times 10^6$ g/m$^3$ for alumina.

The composite oxide content according to the present embodiment can be determined as an average of the composite oxide contents determined for $3 \pm 1$ respective SEM-EDS images.

A "tensile strength" is a value determined with a strength tester (e.g., AG-XPlus, manufactured by Shimadzu Corporation) and a tensile testing jig, by using a method that is in accordance with JIS R 1656. The sample for the measurement may be any CMC having a shape with a width of $10 \pm 1$ mm, a length of $110 \pm 10$ mm and a thickness of $2 \pm 1$ mm and having aluminum tabs attached to both ends. The tensile strength can be determined as an average of tensile strengths measured twice at a loading rate of 0.5 mm/min.

[Ceramic Matrix Composite (CMC)]

A CMC of the present embodiment is a ceramic matrix composite comprising a ceramic matrix and a continuous ceramic fiber. The ceramic matrix comprises an aluminum-containing composite oxide and an oxide that has a composition different from the composition of the composite oxide.

In the CMC of the present embodiment, the ceramic matrix (hereinafter also simply referred to as a "matrix") comprises an aluminum-containing composite oxide and an oxide that has a composition different from the composition of the composite oxide. Consequently, a reduction in the strength of the CMC, in particular, a reduction in tensile strength, due to high temperature exposure is inhibited.

One reason that the inclusion of such a matrix in the CMC of the present embodiment inhibits a reduction in tensile strength due to high temperature exposure is believed to be as follows. In the case of a matrix including an aluminum-containing composite oxide (hereinafter also simply referred to as a "composite oxide"), sintering with a continuous ceramic fiber due to high temperature exposure and resulting adherence between the matrix and the continuous ceramic fiber are significantly inhibited compared to a matrix that does not include an aluminum-containing composite oxide. As a result, the continuous ceramic fiber is unlikely to break when a tensile stress is applied, and thus, high tensile strength of the CMC is achieved.

The matrix includes a composite oxide. The composite oxide may be any oxide that contains aluminum and at least one of metalloid elements and metal elements other than aluminum (Al). The composite oxide may be, for example, at least one selected from the group of mullite ($Al_6O_{13}Si_2$), YAG ($Y_3Al_5O_{12}$) and spinel ($MgAl_2O_4$). Preferably, the composite oxide is at least one of mullite and spinel or is mullite.

The matrix includes an oxide (hereinafter also referred to as a "matrix oxide") that has a composition different from the composition of the composite oxide. The matrix oxide may be an oxide containing at least one selected from the group of silicon, aluminum, zirconium, yttrium, hafnium and magnesium, may be an oxide containing at least one selected from the group of silicon, aluminum, zirconium, yttrium and magnesium, may be an oxide containing at least one selected from the group of silicon, aluminum, yttrium and magnesium, or may be an oxide containing at least aluminum. Particularly preferably, the matrix oxide is an oxide containing one metal element or metalloid element. The oxide is an oxide of silicon, aluminum, zirconium, yttrium, hafnium or magnesium, is an oxide of silicon, aluminum, yttrium or magnesium, or is an oxide of aluminum.

Specifically, the matrix oxide is at least one selected from the group of silica ($SiO_2$), alumina ($Al_2O_3$), zirconia ($ZrO_2$), yttria ($Y_2O_3$), hafnia ($HfO_2$) and magnesia (MgO). The matrix oxide is preferably at least one selected from the group of silica, alumina, zirconia and yttria, more preferably at least one of silica and alumina, even more preferably silica or alumina, still more preferably an oxide containing at least alumina and particularly preferably alumina.

Examples of the zirconia include zirconia that contains a stabilizing element dissolved therein. The zirconia is preferably zirconia that contains yttrium dissolved therein, more preferably zirconia that contains yttrium dissolved therein in an amount of 2 mol% or greater and 6 mol% or less or zirconia that contains yttrium dissolved therein in an amount of 3 mol%, where the amounts are calculated as $Y_2O_3$.

The number of matrix oxides included in the matrix is at least one or may be two or more and five or less, four or less or three or less.

In the CMC of the present embodiment, the matrix is preferably a matrix including at least one of mullite and spinel as the composite oxide and at least one of zirconia and alumina as the matrix oxide, and the matrix is more preferably a matrix including mullite as the composite oxide and alumina as the matrix oxide.

The fact that the CMC of the present embodiment includes a matrix including a composite oxide and a matrix oxide can be confirmed by EBSD observation.

The confirmation by EBSD observation can be carried out as follows.

Specifically, EBSD patterns of the CMC matrix are obtained through EBSD observation thereof, which is performed with a common electron backscatter diffractometer (e.g., Symmetry, manufactured by Oxford Instruments) under the following conditions.

Acceleration voltage: 30 kV
Exposure time: 3 ms
Magnification: 30,000×
Working distance: 8 mm
Step size: 20 nm
Measurement range: 3.26 μm × 4.34 μm

The components (types of oxides) that constitute the matrix are identified by analyzing the obtained EBSD patterns by using crystal structure data. Examples of crystal structure database for use in the analysis include databases included with the device used for the EBSD observation (e.g., HKL Phases (manufactured by Oxford Instruments), Inorganic Crystal Structure Database (manufactured by FIZ Karlsruhe-NIST) and OINA phases (manufactured by Oxford Instruments)).

In the CMC of the present embodiment, a content of the composite oxide (hereinafter also referred to as a "composite oxide content") in the matrix may be 0.5 mass% or greater, 1 mass% or greater, 5 mass% or greater, 10 mass% or greater or 15 mass% or greater and 80 mass% or less, 60 mass% or less, 50 mass% or less, less than 50 mass%, 40 mass% or less or 25 mass% or less, in terms of a ratio of the mass of the composite oxide to the mass of the matrix; preferably, the content is 0.5 mass% or greater and 80 mass% or less, 5 mass% or greater and 60 mass% or less, 5 mass% or greater and 40 mass% or less or 10 mass% or greater and 25 mass% or less. In instances where the composite oxide content satisfies any of these ranges, the resulting composite matrix is likely to have an effect attributable to the configuration of the matrix that is formed of oxides having different compositions. Consequently, the CMC of the present embodiment is less likely to have reduced strength even if the CMC undergoes high temperature exposure.

In the CMC of the present embodiment, the composite oxide may have an average grain size of 0.05 μm or greater, 0.1 μm or 0.15 μm or greater and 10 μm or less, 1 μm or less, 0.3 μm or less or 0.25 μm or less. The average grain size may be 0.05 μm or greater and 10 μm or less, 0.1 μm or greater and 0.3 μm or less or 0.15 μm or greater and 0.25 μm or less.

In the CMC of the present embodiment, the composite oxide may have a coefficient of variation (CV) in the grain size of 20 or greater, 35 or greater or 50 or greater and 80 or less, 70 or less, 65 or less or 60 or less. Preferably, the coefficient of variation (CV) in the grain size is 20 or greater and 80 or less, 35 or greater and 70 or less, 50 or greater and 70 or less or 50 or greater and 65 or less.

In the CMC of the present embodiment, the continuous ceramic fiber may be any continuous fiber that is formed of a ceramic or formed of a polycrystalline ceramic. For example, the continuous ceramic fiber may be a continuous ceramic fiber containing at least one selected from the group of silicon carbide, alumina and mullite and is preferably a continuous ceramic fiber containing at least one of alumina and mullite. Specifically, the continuous ceramic fiber may be at least one selected from the group of continuous silicon carbide fibers, continuous alumina fibers, continuous mullite fibers and continuous mixed alumina-mullite fibers or may be at least one selected from the group of continuous alumina fibers, continuous mullite fibers and continuous mixed alumina-mullite fibers. From the standpoint of strength, it is preferable that the continuous ceramic fiber be an alumina fiber. On the other hand, from the standpoint of thermal stability, it is preferable that the continuous ceramic fiber be at least one of a continuous mullite fiber and a continuous mixed alumina-mullite fiber. More preferably, the continuous ceramic fiber is a continuous mixed alumina-mullite fiber.

The continuous ceramic fiber may be any continuous ceramic fiber that is at least one selected from the group of continuous fibers made of the same compound as that of the matrix, continuous fibers made of a compound different from that of the matrix and continuous mixed ceramic fibers. The continuous ceramic fiber may be a continuous ceramic fiber having a mixed microstructure including alumina grains and mullite grains (continuous mixed alumina-mullite fiber). The continuous mixed alumina-mullite fiber may be, for example, a continuous fiber in which a ratio of alumina ($Al_2O_3$) to mullite ($Al_6O_{13}Si_2$), on a mass basis, is within a range of 30 mass%:70 mass% to 55 mass%:45 mass%.

The continuous ceramic fiber may have a fiber size of, for example, 8 $\mu$m or greater or 10 $\mu$m or greater and 18 $\mu$m or less or 15 $\mu$m or less. The fiber size may be any size that is 8 $\mu$m or greater and 18 $\mu$m or less or 10 $\mu$m or greater and 15 $\mu$m or less.

The continuous ceramic fiber is preferably at least one of a fiber bundle and a ceramic fiber cloth and is more preferably a ceramic fiber cloth.

The ceramic fiber cloth may have a surface density of 250 g/m$^2$ or greater or 500 g/m$^2$ or greater and 900 g/m$^2$ or less or 700 g/m$^2$ or less. The surface density may be, for example, 500 g/m$^2$ or greater and 700 g/m$^2$ or less. The ceramic fiber cloth may have a thickness of 0.2 mm or greater or 0.4 mm or greater and 1.0 mm or less or 0.6 mm or less. The thickness may be, for example, 0.4 mm or greater and 0.6 mm or less.

The CMC of the present embodiment may have a fiber volume fraction of 30 vol.% or greater, 35 vol.%or greater, 40 vol.% or greater or 43 vol.% or greater and 60 vol.% or less, 55 vol.% or less, 50 vol.% or less or 46 vol.% or less. Preferably, the fiber volume fraction is 30 vol.% or greater and 60 vol.% or less, 40 vol.% or greater and 50 vol.% or less, 40 vol.% or greater and 46 vol.% or less or 43 vol.% or greater and 46 vol.% or less. When the fiber volume fraction is within any of these ranges, the continuous ceramic fiber present in the CMC is in an amount suitable for the exhibition of strength, and the CMC is likely to maintain its shape.

The CMC of the present embodiment may have a measured density of, for example, 2.0 g/cm$^3$ or greater, 2.2 g/cm$^3$ or greater or 2.4 g/cm$^3$ or greater and 3.2 g/cm$^3$ or less, 3.0 g/cm$^3$ or less or 2.6 g/cm$^3$ or less, depending on the type of the matrix and the like. Preferably, the measured density is 2.0 g/cm$^3$ or greater and 3.2 g/cm$^3$ or less, 2.2 g/cm$^3$ or greater and 3.0 g/cm$^3$ or less or 2.4 g/cm$^3$ or greater and 2.6 g/cm$^3$ or less.

The CMC of the present embodiment may have a tensile strength, or in particular, a pre-heat-exposure tensile strength (TS), which will be described below, of, for example, 100 MPa or greater, 110 MPa or greater, 130 MPa or greater or 150 MPa or greater and 350 MPa or less, 300 MPa or less, 200 MPa or less or 170 MPa or less, depending on the types of the matrix and the continuous ceramic fiber. Preferably, the tensile strength (TS) is 100 MPa or greater and 350 MPa or less, 100 MPa or greater and 200 MPa or less, 110 MPa or greater and 200 MPa or less or 130 MPa or greater and 170 MPa or less. Specifically, when the CMC contains mullite and alumina as the matrix and a continuous alumina fiber as the continuous ceramic fiber, the CMC may have a tensile strength (pre-heat-exposure tensile strength) of, for example, 150 MPa or greater, 200 MPa or greater or 220 MPa or greater and 350 MPa or less or 300 MPa or less. Preferably, the tensile strength is 150 MPa or greater and 350 MPa or less. When the CMC contains mullite and alumina as the matrix and a continuous mixed alumina-mullite fiber as the continuous ceramic fiber, the CMC may have a tensile strength (pre-heat-exposure tensile strength, which will be described below) of, for example, 100 MPa or greater, 130 MPa or greater or 140 MPa or greater and 230 MPa or less, 200 MPa or less or 170 MPa or less. The tensile strength may be 100 MPa or greater and 230 MPa or less, 100 MPa or greater and 200 MPa or less, 110 MPa or greater and 200 MPa or less or 130 MPa or greater and 170 MPa or less.

Preferably, the CMC of the present embodiment does not have a significant change in tensile strength resulting from high temperature exposure. For example, in instances where the CMC of the present embodiment is subjected to a treatment in an air atmosphere at 1250°C for 100 hours (hereinafter, such a treatment is also referred to as "heat exposure"), a ratio [%] of a post-heat-exposure tensile strength (TS') [MPa] to the pre-heat-exposure tensile strength (TS) [MPa] is preferably 75% or greater, 80% or greater or 85% or greater, and the ratio may be 150% or less, 140% or less, 120% or less, 100% or less, 99% or less or 90% or less (hereinafter, the ratio is also referred to as a "strength retention ratio"). Specifically, the strength retention ratio may be, for example, 75% or greater and 150% or less, 80% or greater and 120% or less, 80% or greater and 100% or less or 80% or greater and 90% or less. In the CMC of the present embodiment, heat exposure may cause sintering between grains in the matrix, and in such a case, the post-heat-exposure tensile strength may be higher than the pre-heat-exposure tensile strength.

In the CMC of the present embodiment, the post-heat-exposure tensile strength (TS') may be, for example, 80 MPa or greater, greater than 80 MPa, 95 MPa or greater or 110 MPa or greater and 350 MPa or less, 300 MPa or less, 200 MPa or less or 150 MPa or less. The tensile strength (TS') may be greater than 80 MPa and 350 MPa or less, greater than 80 MPa and 200 MPa or less or 95 MPa or greater and 150 MPa or less. The post-heat-exposure tensile strength depends on the type of the continuous ceramic fiber. Specifically, when the CMC includes a continuous alumina fiber as the continuous ceramic fiber, the CMC may have a tensile strength of, for example, 110 MPa or greater, 120 MPa or greater or 150 MPa or greater and 300 MPa or less or 200 MPa or less. When the CMC includes a continuous mixed alumina-mullite fiber as the continuous ceramic fiber, the CMC may have a post-heat-exposure tensile strength of, for example, 80 MPa or greater or 100 MPa or greater and 230 MPa or less.

In the present embodiment, parameters may have any upper and lower limits selected from the above-mentioned values in any combination, where the parameters include the composite oxide content, the average grain size of the composite oxide, the coefficient of variation in the grain size of the composite oxide, the fiber size, the surface density of the ceramic fiber cloth, the thickness of the ceramic fiber cloth, the fiber volume fraction, the density and the tensile strength.

The CMC of the present embodiment can be used in known applications of CMCs. The CMC can be used in a component that is to include a CMC, particularly, in an application that requires thermal stability. Such a component may be, for example, at least one selected from the group of heat-resistant structural materials, heat-resistant filters, turbine components and nuclear-power-related components.

[Method for Producing Ceramic Matrix Composite]

The ceramic matrix composite of the present embodiment may be produced by any method as long as the ceramic matrix composite has the above-described features. A preferred method for producing the ceramic matrix composite of the present embodiment is a method for producing the ceramic matrix composite including the steps of preparing a mixture by mixing a slurry with a continuous ceramic fiber, the slurry including an aluminum-containing composite oxide source and an oxide source that has a composition different from the composition of the composite oxide source; solidifying the mixture to form a green body; and firing the green body.

The production method of the present embodiment includes the step (hereinafter also referred to as a "mixing step") of preparing a mixture by mixing a slurry (hereinafter also referred to as a "matrix slurry") with a continuous ceramic fiber, the slurry including an aluminum-containing composite oxide source and an oxide source that has a composition different from the composition of the composite oxide source (these sources are also collectively referred to as "matrix source").

The aluminum-containing composite oxide source (hereinafter also simply referred to as a composite oxide source) may be any composite oxide or a precursor thereof, which may be, for example, at least one selected from the group of mullite, YAG and spinel. Preferably, the composite oxide source is at least one of mullite and spinel, and more preferably mullite.

The oxide source that has a composition different from the composition of the composite oxide source (hereinafter also simply referred to as an "oxide source") may be any oxide source that is at least one of a matrix oxide or a precursor thereof. Preferred examples of the oxide source include at least one selected from the group of silica, alumina, zirconia, yttria, hafnia and magnesia. The oxide source is preferably at least one selected from the group of silica, alumina, zirconia and yttria and more preferably at least one of silica and alumina. The oxide source is an oxide containing one metal element or metalloid element. The oxide source is preferably an oxide of silicon, aluminum, zirconium, yttrium, hafnium or magnesium or an oxide of silicon, aluminum, yttrium or magnesium or preferably includes at least alumina. The zirconia may be zirconia that contains a stabilizing element dissolved therein and may be zirconia that contains yttrium dissolved therein. Specifically, the zirconia may be, for example, zirconia that contains yttrium dissolved therein in an amount of 2 mol% or greater and 4 mol% or less, calculated as $Y_2O_3$, or zirconia that contains yttrium dissolved therein in an amount of 3 mol%, calculated as $Y_2O_3$.

The composite oxide source and the oxide source may each have an average particle size of 0.05 $\mu$m or greater, 0.1 $\mu$m or greater, 0.2 $\mu$m or greater or 0.4 $\mu$m or greater and 10 $\mu$m or less, 5 $\mu$m or less, 3 $\mu$m or less or 1 $\mu$m or less so that the matrix source can be readily dispersed uniformly around the continuous ceramic fiber. Preferably, the average particle size is 0.05 $\mu$m or greater and 10 $\mu$m or less, 0.1 $\mu$m or greater and 5 $\mu$m or less, 0.4 $\mu$m or greater and 3 $\mu$m or less or 0.4 $\mu$m or greater and 1 $\mu$m or less.

Regarding the composite oxide source and the oxide source that are subjected to the mixing step, a ratio of the average particle size of the composite oxide source to the average particle size of the oxide source (hereinafter also referred to as a "particle size ratio") may be 0.01 or greater, 0.05 or greater or 0.1 or greater and 1.2 or less, 1 or less or 0.6 or less. Preferably, the ratio is 0.01 or greater and 1.2 or less, 0.01 or greater and 0.6 or less, 0.05 or greater and 0.6 or less or 0.1 or greater and 0.6 or less. It is preferable that the particle size ratio be 0.6 or greater and 1.2 or less, because in this case, the resulting CMC has a higher strength retention ratio even if the composite oxide content is not substantially varied.

The composite oxide source and the oxide source may each have a BET specific surface area of 0.1 $m^2/g$ or greater and 0.5 $m^2/g$ or greater, 6 $m^2/g$ or greater, 7 $m^2/g$ or greater or 8 $m^2/g$ or greater and 50 $m^2/g$ or less, 40 $m^2/g$ or less, 30 $m^2/g$ or less or 10 $m^2/g$ or less. Preferably, the BET specific surface area is 0.1 $m^2/g$ or greater and 50 $m^2/g$ or less or 0.5 $m^2/g$ or greater and 10 $m^2/g$ or less.

The matrix source may be in any form as long as they are in a state of being able to be dispersed in the matrix slurry. Preferably, the matrix source is at least one of a powder and a particulate colloid, and more preferably a powder.

Preferably, the matrix source has an average particle size of 0.01 $\mu$m or greater or 0.1 $\mu$m or greater and 10 $\mu$m or less, 5 $\mu$m or less, 3 $\mu$m or less or 1 $\mu$m or less.

Preferably, the matrix source has a BET specific surface area of 0.1 $m^2/g$ or greater, 0.5 $m^2/g$ or greater, 5 $m^2/g$ or greater, 7 $m^2/g$ or greater or 8 $m^2/g$ or greater and 50 $m^2/g$ or less or 30 $m^2/g$ or less.

The content of the composite oxide source in the matrix source (hereinafter also referred to as a "composite oxide source content") is a mass [mass%] of a metal element and a metalloid element that are present in the composite oxide source to a total mass of a metal element and a metalloid element that are present in the oxide source and the composite oxide source, where the masses are calculated on an oxide basis. The content of the composite oxide source may be, for example, 0.5 mass% or greater, 1 mass% or greater, 5 mass% or greater or 10 mass% or greater and 80 mass% or less, 60 mass% or less, 50 mass% or less, less than 50 mass% or 30 mass% or less and is preferably 0.5 mass% or greater and 80 mass% or less, 5 mass% or greater and 80 mass% or less, 5 mass% or greater and 60 mass% or less or 10 mass% or greater and less than 50 mass%. It is preferable that the composite oxide source content be 5 mass% or greater and 50 mass% or less or 10 mass% or greater and 30 mass% or less, because in this case, the resulting CMC tends to be denser. Regarding the oxide-basis calculation for metal elements and the like, the following oxides are used: $Al_2O_3$ for aluminum (Al), $SiO_2$ for silicon (Si), $MgO$ for magnesium (Mg), $Y_2O_3$ for yttrium (Y), $ZrO_2$ for zirconium (Zr) and $HfO_2$ for hafnium (Hf).

When the composite oxide source is mullite, and the oxide source is alumina, the composite oxide source content can be determined according to the following equation.

$$[\{(\text{Mass [g] of mullite})/(\text{mass of mullite} + \text{mass of alumina}) \text{ [g]}\}] \times 100 = \{(3Al_2O_3 \cdot 2SiO_2)\}/\{(3Al_2O_3 \cdot 2SiO_2) + Al_2O_3\} \times 100$$

The matrix slurry includes a solvent, and the solvent may be any solvent in which the matrix source can be dispersed. The solvent may be, for example, at least one selected from the group of water, methanol, ethanol, 1-propanol, 2-propanol, 1-butanol, 2-butanol, butyl alcohol, isobutyl alcohol, acetone, methyl ethyl ketone, methyl isobutyl ketone, diisobutyl ketone, cyclohexanone, diacetone alcohol, benzene, toluene, xylene, ethyl acetate, methyl acetate, butyl acetate, methoxybutyl acetate, isobutyl acetate, normal hexane, heptane, cyclohexane, methylcyclohexane, ethylene glycol, ethylene glycol monomethyl ether, ethylene glycol monoethyl ether, ethylene glycol monobutyl ether, propylene glycol monomethyl ether, N,N-dimethylformamide, tetrahydrofuran, N-methyl-2-pyrrolidone, 1,4-dioxane and styrene. The solvent is preferably at least one selected from the group of water, methanol, ethanol, 1-propanol, 2-propanol, 1-butanol, 2-butanol, butyl alcohol and isobutyl alcohol, more preferably at least one of water and ethanol and even more preferably water.

The matrix slurry may have a solids concentration of, for example, 30 mass% or greater or 40 mass% or greater and 90 mass% or less or 85 mass% or less. The solids concentration may be any value that is 30 mass% or greater and 90 mass% or less or 40 mass% or greater and 85 mass% or less.

The "solids concentration" is a ratio [mass%] of the sum of the masses of a metal element and a metalloid element that are present in the composite oxide source and the oxide source to the sum of the mass of the solvent and the masses of the metal element and the metalloid element that are present in the matrix slurry, where the masses are calculated on an oxide basis. For example, in the case of a matrix slurry including mullite as the composite oxide source, alumina as the oxide source, and water as the solvent, the solids concentration can be determined by {(mass [g] of alumina + mass [g] of mullite)/(mass of alumina + mass of mullite + mass of water) [g]} × 100. Note that the solids concentration can also be determined by evaporating the solvent from the matrix slurry and determining a ratio of the mass of the remainder to the mass of the matrix slurry.

The matrix slurry that is subjected to the mixing step can be produced by any method as long as the method enables the mixing of the matrix source with the solvent. Preferably, the matrix slurry is prepared by grinding and mixing. Specifically, the matrix slurry may be, for example, a matrix slurry prepared by mixing the matrix source with the solvent and grinding the resultant in a ball mill. The balls used in the ball mill may be any balls that can break down loose agglomeration of the matrix source and may be any ceramic balls larger than the average particle size of the matrix source or the like. Examples of such balls include ceramic balls having a diameter of 0.5 mm or greater and 20 mm or less or a diameter of 1 mm or greater and 15 mm or less. The ceramic balls may be at least one of alumina balls and zirconia balls or may be alumina balls.

The duration of the mixing may be varied as desired in accordance with the amount of the ceramic slurry required and the target particle size. For example, the duration of the mixing may be 12 hours or more and 72 hours or less. As the duration of the mixing increases, the average particle size tends to decrease until an equilibrium is reached.

The continuous ceramic fiber may be any continuous fiber formed of a ceramic. The continuous ceramic fiber may be, for example, a continuous ceramic fiber including at least one selected from the group of silicon carbide, alumina and mullite and preferably be a continuous ceramic fiber including at least one of alumina and mullite. Specifically, the continuous ceramic fiber may be at least one selected from the group of continuous silicon carbide fibers, continuous alumina fibers, continuous mullite fibers and continuous mixed alumina-mullite fibers or may be at least one selected from the group of continuous alumina fibers, continuous mullite fibers and continuous mixed alumina-mullite fibers.

In the mixing step, the mixing may be performed by any method that enables uniform mixing of the matrix source with the continuous ceramic fiber. For example, the method may involve impregnation of the continuous ceramic fiber with the matrix slurry. Specifically, the method for the mixing may be, for example, at least one of vacuum impregnation and pressure impregnation.

The vacuum impregnation may be a treatment performed under the following conditions.

Impregnation atmosphere: degree of vacuum of 85% or greater or degree of vacuum of 90% or greater and degree of vacuum of 100% or less, degree of vacuum of less than 100% or degree of vacuum of 99% or less
Impregnation temperature: 0°C or greater or 10°C or greater and 40°C or less or 35°C or less

The pressure impregnation may be a treatment performed under the following conditions.

Impregnation pressure: 0.11 MPa or greater or 0.15 MPa or greater and 2.0 MPa or less or 1.8 MPa or less
Impregnation temperature: 0°C or greater or 10°C or greater and 40°C or less or 35°C or less

Specifically, the method for the mixing may be a method in which the continuous ceramic fiber is impregnated with the matrix slurry at a temperature of 0°C or greater and 35°C or less in a vacuum with a degree of vacuum of 95% or greater and less than 100%.

The production method of the present embodiment includes a step of solidifying the mixture to form a green body (hereinafter also referred to as a "molding step"). Accordingly, a green body that is a precursor of the CMC of the present embodiment can be prepared. The solidification of the mixture may be performed by any method that enables the mixture to be solidified and have a specific shape. For example, the method may be at least one selected from the group of heat treatments, freezing treatments and additive treatments. In the molding step, two or more types of solidification methods may be combined, or one solidification method may be performed multiple times, for example, twice or more and five times or less.

The heat treatment may be a treatment performed under the following conditions.

Heat treatment temperature: 50°C or greater, 60°C or greater or 80°C or greater and 160°C or less or 140°C or less
Number of times the heat treatment is performed: once or more and five times or less

The duration of the heat treatment may be adjusted as desired in accordance with an amount of the mixture that is treated and the heat treatment temperature. The duration may be, for example, 1 hour or more and 30 hours or less, 2 hours or more and 20 hours or less or 3 hours or more and 10 hours or less.

The freezing treatment may be a treatment performed under the following conditions.

Freezing temperature: -200°C or greater or -180°C or greater and -20°C or less or -30°C or less
Sublimation pressure: 0.001 MPa or greater or 0.002 MPa or greater and 0.05 MPa or less or 0.03 MPa or less
Number of times the treatment is performed: once or more and five times or less

In instances where the freezing treatment is performed multiple times, the freezing temperature and the sublimation pressure are not limited.

The additive treatment may be a treatment in which the mixture is molded by mixing one or more additives, such as a solidifying agent and a binder, with the mixture. The additive may be any additive known in the art that can be used in the production of CMCs. For example, the additive may be at least one selected from the group of agar, gelatin, methyl cellulose, camphene, sodium alginate, 2-hydroxyethyl acrylate, 4-hydroxybutyl acrylate, 6-hydroxyhexyl acrylate, acrylic acids, methacrylic acids, acrylamides, N,N'-methylenebisacrylamide, N,N'-ethylene-bis-acrylamide methacrylamide, polyethylene glycol diacrylate, methyl acrylate, methyl methacrylate, ethyl acrylate, ethyl methacrylate, butyl acrylate, urea, boron nitride (BN), aluminum nitride (AIN), silicon nitride ($Si_3N_4$), gallium nitride (GaN), zirconium nitride (ZrN), polyaluminum chloride ($[Al_2(OH)_nCl_{6n}]_m$, $1 \leq n \leq 5$, $m \leq 10$), aluminum trimethoxide, aluminum triethoxide, tri-n-propoxyaluminum, tri-i-propoxyaluminum, tri-n-butoxyaluminum, tri-i-butoxyaluminum, tri-sec-butoxyaluminum, tri-t-butoxyaluminum, trimethoxyboron, triethoxyboron, tri-n-propoxyboron, tri-i-propoxyboron, tetramethoxysilane, tetraethoxysilane, tetra-n-propoxysilane, tetra-i-propoxysilane, tetra-n-butoxysilane, tetra-i-butoxysilane, tetra-n-butoxysilane, tetra-sec-butoxysilane, tetra-t-butoxysilane, methyltrimethoxysilane, ethyltrimethoxysilane, propyltrimethoxysilane, methyltriethoxysilane, ethyltriethoxysilane, propyltrimethoxysilane, propyltriethoxysilane, paraffin waxes and polyvinyl alcohols.

The additive treatment may be, for example, at least one selected from the group of a method in which a solidifying agent and a binder are mixed with the mixture; a method in which a solidifying agent is mixed with the mixture; and a method in which a binder is mixed with the mixture. Preferably, the additive treatment is a method in which a solidifying agent and a binder are mixed with the mixture.

In the production method of this embodiment, the mixing step and the molding step may be repeated. In this instance, a mixing step and a molding step that are involved may be performed under similar conditions, except that, instead of the continuous ceramic fiber, the green body produced by the molding step is subjected to the mixing step. The production method of the present embodiment may include, for example, performing the mixing step and the molding step once or more and five times or less.

The method for producing the CMC of the present embodiment may include a calcination step for calcining the green body to form a calcined body before firing the green body.

In the calcination step, the green body is calcined to form a calcined body. The calcination may be performed under any conditions that allow necking between the particles of the matrix source to proceed. The conditions for the calcination may be as follows.

Calcination atmosphere: oxidizing atmosphere or inert atmosphere, with air atmosphere being preferable
Calcination temperature: 800°C or greater or 850°C or greater and less than 1000°C or 900°C or less

The duration of the calcination may be varied as desired depending on the size of the green body, the ability of the calcination furnace that is used, and the like. The duration may be, for example, 30 minutes or more and 120 hours or less.

In the production method of the present embodiment, the calcined body may further be subjected to a mixing step. The mixing step may be performed under conditions similar to the conditions described above, except that the calcined body, instead of the green body, is used. The calcined body mixed with the matrix slurry may be calcined by any method.

The production method of the present embodiment includes a step of firing the green body (hereinafter also referred to as a "firing step"). Accordingly, the CMC of the present embodiment can be obtained. In instances where the production method of the present embodiment includes the calcination step, the calcined body, instead of the green body, can be subjected to the firing. The firing can be performed under any conditions that allow the sintering of the matrix source to proceed. The conditions for the firing may be as follows.

Firing atmosphere: oxidizing atmosphere or inert atmosphere, with air atmosphere being preferable
Firing temperature: 1000°C or greater, 1100°C or greater or 1200°C or greater and 1500°C or less, 1450°C or less or 1400°C or less
Number of times the firing is performed: once or more and five times or less

The duration of the firing may be varied as desired depending on the size of the green body (or the calcined body) and properties of the firing furnace that is used. The duration may be, for example, 30 minutes or more and 120 hours or less. In instances where the firing is performed multiple times, the firing atmosphere and the firing temperature are not limited.

The firing may be pressureless firing, which is preferable because of its operational simplicity. In the present embodiment, the "pressureless firing" refers to a method of performing firing by applying heat, without applying any external force during firing, to the firing object (the green body, the calcined body or the like).

In instances where the method for producing the CMC of the present embodiment includes the calcination step, the calcined body, instead of the green body, may be subjected to the firing.

In the production method of the present embodiment, parameters may have any upper and lower limits selected from the above-mentioned values in any combination, where the parameters include the average particle size of the matrix source, the BET specific surface area of the matrix source, the composite oxide source content, the solids concentration, the impregnation atmosphere, the impregnation temperature, the impregnation pressure, the heat treatment temperature, the freezing temperature, the sublimation pressure, the calcination temperature and the firing temperature.

EXAMPLES

Now, the present disclosure will be described in more detail with reference to Examples. However, the present disclosure is not limited to the Examples.

(SEM Observation and SEM-EDS Observation)

An 8 mm × 6 mm rectangular plate-shaped piece was cut from a CMC with a diamond cutter. The surface (cut surface) that was exposed by the cutting was processed with a cross section polisher (manufactured by Jeol Ltd.), and the processed cut surface was used as the observation surface. Gold (Au) was vapor-deposited onto the cut surface, and the CMC was observed with a scanning electron microscope (instrument name: JSM-7600F, manufactured by Jeol Ltd.) under the following conditions.

Acceleration voltage: 5 kV
Magnification: 130×

The SEM images were binarized with image analysis software (software name: ImageJ, manufactured by the National Institutes of Health) before the calculation of the fiber volume fraction, which will be described below.
In SEM-EDS observation, the CMC was observed with a scanning electron microscope (instrument name: JSM-7600F, manufactured by Jeol Ltd.) and an energy dispersive X-ray spectroscope (instrument name: NSS312E + UltraDry 30 mm$^2$, manufactured by Thermo Fisher Scientific) under the following conditions. The observation surface was processed as in the SEM observation.

Acceleration voltage: 5 kV
Magnification: 10,000×

The SEM-EDS images were binarized with image analysis software (software name: ImageJ, manufactured by the National Institutes of Health) before the calculation of the content of the composite oxide, which will be described below.

(Average Grain Size and Coefficient of Variation in Grain Size)

The average grain size was determined in the following manner. EBSD observation data were acquired with an electron backscatter diffractometer (instrument name: Symmetry, manufactured by Oxford Instruments) under the following conditions.

Acceleration voltage: 30 kV
Exposure time: 3 ms
Magnification: 30,000×
Working distance: 8 mm
Step size: 20 nm
Measurement range: 3.26 μm × 4.34 μm

Next, the EBSD observation data were analyzed with analysis software (product name: AZtecCrystal, manufactured by Oxford Instruments) under the following conditions, to determine equivalent circular diameters of grains of the composite oxide. The equivalent circular diameters were designated as the grain sizes of the composite oxide, and the average grain size was determined as an average of the grain sizes.

Misorientation angle: 5°
Number of grains: 100±50

The analysis was performed with crystal structure databases included with the electron backscatter diffractometer (database names: HKL Phases (manufactured by Oxford Instruments), Inorganic Crystal Structure Database (manufactured by FIZ Karlsruhe-NIST) and OINA phases (manufactured by Oxford Instruments). Accordingly, EBSD mappings were obtained.
The sample for the EBSD observation was prepared as follows. A 10 mm × 6 mm rectangular plate-shaped piece was cut from the CMC with a diamond cutter, then, the surface that was exposed by the cutting was processed with a cross section polisher, and subsequently, FIB processing was performed on the piece at an acceleration voltage of 30 kV. The surface that underwent the FIB processing was used as the observation surface.
Furthermore, the coefficient of variation (CV) in the grain size was determined by dividing a standard deviation in the grain size by the average grain size.

(Fiber Volume Fraction)

The fiber volume fraction was determined as an average of several volume fractions (Vf) [vol.%], which were determined by using the SEM images obtained with a scanning electron microscope (instrument name: JSM-7600F, manufactured by Jeol Ltd.) under the following conditions and using equation (1), shown above.

Acceleration voltage: 5 kV
Magnification: 130$\times$

The $A_f$ and the $A_m$ in equation (1) were determined by performing binarization and image analysis by using image analysis software (product name: ImageJ, manufactured by the National Institutes of Health).

The fiber volume fraction ($V_{f\text{-ave}}$) can be determined as an average of 12 $V_f$'s.

The SEM observation was initiated as follows. An 8 mm $\times$ 6 mm rectangular plate-shaped piece was cut from the CMC with a diamond cutter. Subsequently, the surface (cut surface) that was exposed by the cutting was processed with a cross section polisher, then, gold (Au) was vapor-deposited onto the processed cut surface, and the resulting surface was used as the observation surface.

(Composite Oxide Content)

The composite oxide content of the matrix was determined by performing binarization and image analysis on the SEM-EDS images with image analysis software (product name: ImageJ, manufactured by the National Institutes of Health) and using equation (2), shown above. The SEM-EDS images were obtained through the SEM-EDS observation performed with a scanning electron microscope (instrument name: JSM-7600F, manufactured by Jeol Ltd.) and an energy dispersive X-ray spectroscope (instrument name: NSS312E + UltraDry 30mm$^2$, manufactured by Thermo Fisher Scientific) under the following conditions.

Acceleration voltage: 5 kV
Magnification: 20,000$\times$

The content of the composite oxide was determined for three respective SEM-EDS images, and the composite oxide content was determined as an average of the values.

(Average Particle Size)

The average particle size of powder samples was determined with a method that is in accordance with JIS R 1629, with a laser diffraction/scattering particle size distribution analyzer (instrument name: MT3300EX-II, manufactured by MicrotracBEL). The conditions for the measurement were as follows.

Light source: semiconductor laser
Voltage: 780 mW
Measurement sample: slurry containing a raw material powder dispersed in purified water
Refractive index of alumina: 1.77
Refractive index of mullite: 1.65
Refractive index of silica: 1.48
Refractive index of solvent (water): 1.333
Calculation mode: MT3000EXII

In a pretreatment, the sample powder and 0.2 mass% of an ammonium polyacrylate dispersing agent were suspended in purified water to form a slurry, and subsequently, the slurry was dispersed with an ultrasonic homogenizer (device name: Branson Sonifier 250, from Emerson) for 3 minutes.

(BET Specific Surface Area)

The BET specific surface area, which is a BET specific surface area measured in accordance with JIS Z 8830, was measured with a BET single-point method that used a carrier gas process in which nitrogen was used as the adsorption gas (instrument name: Belsorp MR6, manufactured by MicrotracBEL). The conditions for measuring the BET specific surface area were as follows.

Adsorption medium: $N_2$
Adsorption temperature: -196°C
Pretreatment conditions: treatment in air at 200°C for 30 minutes

(Measured Density)

The density was determined with a method that is in accordance with JIS R 1634, by determining the ratio [g/cm$^3$] of a volume measured by the Archimedes method to a mass measured with an electronic balance. Before the measurement of the volume, a pretreatment was performed as follows: the mass of the CMC was measured after it was dried, and subsequently, the CMC was boiled in purified water for 3 hours.

(Tensile Strength)

The tensile strength of the CMC was measured with a method that is in accordance with JIS R 1656. The measurement was performed with a strength tester (device name: AG-XPlus, manufactured by Shimadzu Corporation) and a tensile testing jig at a loading rate of 0.5 mm/min.
Before the measurement, a tensile test specimen was prepared, which was a CMC having a width of 10±1 mm, a length of 110±10 mm and a thickness of 2±1 mm and having aluminum tabs attached to both ends. The width and the thickness of the tensile test specimen was measured with a micrometer, and the length of the specimen was measured with a caliper.
The measurement was performed twice, and the tensile strength of the CMC was determined as an average of the values.
Furthermore, the strength retention ratio was determined as the ratio [%] of the post-heat-exposure tensile strength of the CMC to the pre-heat-exposure tensile strength of the CMC.

Synthesis Example 1

800 g of a commercially available mullite powder (product name: KM101, manufactured by KCM Corporation), 40 g of a dispersing agent (product name: A-6114, manufactured by Toagosei Co., Ltd.) and 1200 g of purified water were weighed, and these were mixed for 18 hours in a bead mill with alumina beads of 0.3 mm in diameter used as grinding media, to form a slurry.
The resulting slurry was dried at 120°C to remove the solvent (purified water) to afford a mullite powder (average particle size: 0.2 $\mu$m, BET specific surface area: 28 m$^2$/g), which served as a mullite powder of this synthesis example.

Synthesis Example 2

A mullite powder was prepared in a manner similar to that of Synthesis Example 1, except that a slurry was formed by performing mixing for 2 hours in a bead mill with alumina beads of 1.0 mm in diameter used as grinding media. This mullite powder (average particle size: 0.6 $\mu$m, BET specific surface area: 9.2 m$^2$/g) served as a mullite powder of this synthesis example.

Example 1

[Preparation of Matrix Slurry]

47 g of the mullite powder of Synthesis Example 1, 47 g of an $\alpha$-alumina powder (average particle size: 0.2 $\mu$m) and 28 g of purified water were weighed, and subsequently, these were mixed for 24 hours in a ball mill with alumina balls of 10 mm in diameter used as grinding media, to form a mullite-containing alumina slurry (solids concentration: 72 mass%) having a composite oxide source content of 50 mass%.

[Preparation of CMC]

A continuous mixed alumina-mullite fiber cloth (fiber size: 13±1 $\mu$m, thickness of cloth: 0.55±0.02 $\mu$m, product name: Nextel-720, manufactured by 3M Company) was impregnated with the prepared mullite-containing alumina slurry, and the impregnated continuous fiber cloth was subjected to a heat treatment (120±10°C, 6±2 hours) to form a green body having a width of 130 mm, a length of 110 mm and a thickness of 2 mm. The resulting green body was heat-treated in an air atmosphere at 900°C to form a calcined body. The calcined body was heat-treated in an air atmosphere at 1100°C to afford a CMC, which was formed of a continuous mixed alumina-mullite fiber cloth and a matrix having a composite oxide content of 53.1 mass% and containing mullite and alumina.

Example 2

A CMC was prepared in a manner similar to that of Example 1, except that 9.4 g of the mullite powder of Synthesis Example 1 and 84 g of the alumina powder were used. The CMC was formed of a continuous mixed alumina-mullite fiber cloth and a matrix having a composite oxide content of 8.4 mass% and containing mullite and alumina.

Example 3

A CMC was prepared in a manner similar to that of Example 1, except that 23 g of the mullite powder of Synthesis Example 1 and 70 g of the alumina powder were used. The CMC was formed of a continuous mixed alumina-mullite fiber cloth and a matrix having a composite oxide content of 22.6 mass% and containing mullite and alumina.

Comparative Example 1

A CMC was prepared in a manner similar to that of Example 1, except that 23 g of a commercially available silica powder (product name: 1-FX, manufactured by Tatsumori Ltd., average particle size: 0.24 $\mu$m, BET specific surface area: 23 m$^2$/g) was used instead of the mullite powder, and 32 g of purified water was used. The CMC was formed of a continuous mixed alumina-mullite fiber cloth and a matrix containing silica and alumina.

The results of Examples 1 to 3 and Comparative Example 1 are shown in the table below.

[Table 1]

| | Composite Oxide Content [wt%] | Average Grain Size [μm] | Coefficient of Variation (CV) | Fiber Volume Fraction [%] | Measured Density [g/cm³] | Tensile Strength [MPa] | | Strength Retention Ratio |
|---|---|---|---|---|---|---|---|---|
| | | | | | | Before High Temperature Exposure (TS) | After High Temperature Exposure (TS') | |
| Example 1 | 53.1 | 0.14 | 40 | 43.7 | 2.40 | 147 | 153 | 104% |
| Example 2 | 8.4 | 0.14 | 44 | 46.7 | 2.59 | 174 | 164 | 94% |
| Example 3 | 22.6 | 0.13 | 44 | 45.8 | 2.46 | 149 | 167 | 112% |
| Comparative Example 1 | | | | | | 110 | 80 | 73% |

Table 1 confirms that in the CMCs of the Examples, the pre-high-temperature-exposure tensile strength was high, and the strength retention ratio was also high, compared to the CMC of Comparative Example 1, which included a matrix formed of silica and alumina. In the CMC of Example 2, the amount of use of mullite (10.1%) was approximately one third the amount of use of silica (32.9 mass%) in the CMC of Comparative Example 1; nevertheless, the pre-high-temperature-exposure tensile strength was significantly high, and the strength retention ratio was high. Accordingly, it is confirmed that a CMC in which a reduction in strength due to high-temperature treatment was inhibited could be obtained with an amount of addition smaller than that of silica. In addition, in the CMC of Comparative Example 1, the silica in the matrix was vitrified, which made it impossible to measure the composite oxide content, the average grain size and the like.

An EBSD crystal phase mapping of Example 1 (Fig. 1) confirms that the CMC of Example 1 contains mullite and alumina in the ceramic matrix.

The CMCs prepared in the Examples included a matrix containing mullite and alumina, which are aluminum-containing composite oxides. It is confirmed that in the Examples, the inclusion of mullite and alumina resulted in a strength retention ratio of 80% or greater and inhibition of a reduction in the strength of the CMCs due to high temperature exposure. In contrast, in the case of the CMC of Comparative Example 1, which included a matrix containing alumina and silica, which is not an aluminum-containing composite oxide, the strength retention ratio was 73%, which indicates a significant reduction in the strength of the CMC due to high temperature exposure.

Example 4

[Preparation of Matrix Slurry]

4.7 g of the mullite powder of Synthesis Example 2, 89 g of an $\alpha$-alumina powder (average particle size: 0.2 $\mu$m) and 28 g of purified water were weighed, and subsequently, these were mixed for 24 hours in a ball mill with alumina balls of 10 mm in diameter used as grinding media, to form a mullite-containing alumina slurry (solids concentration: 72 mass%) having a composite oxide source content of 5 mass%.

[Preparation of CMC]

A CMC was prepared in a manner similar to that of Example 1, except that the obtained mullite-containing alumina slurry was used. The CMC was formed of a continuous mixed alumina-mullite fiber cloth and a matrix containing mullite and alumina.

Example 5

A CMC was prepared in a manner similar to that of Example 1, except that 9.4 g of the mullite powder of Synthesis Example 2 and 84 g of the alumina powder were used. The CMC was formed of a continuous mixed alumina-mullite fiber cloth and a matrix containing mullite and alumina.

Example 6

A CMC was prepared in a manner similar to that of Example 1, except that 23 g of the mullite powder of Synthesis Example 2 and 70 g of the alumina powder were used. The CMC was formed of a continuous mixed alumina-mullite fiber cloth and a matrix containing mullite and alumina.

Example 7

A CMC was prepared in a manner similar to that of Example 1, except that 47 g of the mullite powder of Synthesis Example 2 and 47 g of the alumina powder were used. The CMC was formed of a continuous mixed alumina-mullite fiber cloth and a matrix containing mullite and alumina.

Example 8

A CMC was prepared in a manner similar to that of Example 1, except that 56 g of the mullite powder of Synthesis Example 2 and 38 g of the alumina powder were used. The CMC was formed of a continuous mixed alumina-mullite fiber cloth and a matrix containing mullite and alumina.

Example 9

A CMC was prepared in a manner similar to that of Example 1, except that 75 g of the mullite powder of Synthesis Example 2 and 19 g of the alumina powder were used. The CMC was formed of a continuous mixed alumina-mullite fiber cloth and a matrix containing mullite and alumina.

The results of Examples 4 to 9 are shown in the table below.

[Table 2]

| | Composite Oxide Content [wt%] | Average Grain Size [μm] | Coefficient of Variation (CV) | Fiber Volume Fraction [%] | Measured Density [g/cm³] | Tensile Strength [MPa] | | Strength Retention Ratio |
| | | | | | | Before High Temperature Exposure (TS) | After High Temperature Exposure (TS') | |
|---|---|---|---|---|---|---|---|---|
| Example 4 | 3.5 | 0.21 | 75 | 45.1 | 2.49 | 173 | 145 | 84% |
| Example 5 | 10.9 | 0.23 | 55 | 45.3 | 2.64 | 172 | 151 | 88% |
| Example 6 | 18.1 | 0.23 | 63 | 43.4 | 2.53 | 158 | 138 | 87% |
| Example 7 | 44.3 | 0.19 | 69 | 44.0 | 2.49 | 174 | 152 | 87% |
| Example 8 | 55.8 | 0.20 | 64 | 42.6 | 2.44 | 161 | 162 | 101% |
| Example 9 | - | - | - | - | - | 156 | 129 | 83% |

Examples 4 to 9 had composite oxide contents (mullite contents) that increased in the order of the Example's number. Despite the fact that mullite has a lower true density than alumina, the CMCs of Examples 5 to 7 had a higher measured density than the CMC of Example 4. Accordingly, it is confirmed that when the composite oxide content was in the range of 10 mass% or greater and 50 mass% or less, the CMC was particularly dense.

Example 10

A CMC was prepared in a manner similar to that of Example 1, except that 9.4 g of a commercially available mullite powder (product name: KM101, manufactured by KCM Corporation, average particle size: 1.8 μm, BET specific surface area: 7.0 m²/g) and 84 g of the alumina powder were used. The CMC was formed of a continuous mixed alumina-mullite fiber cloth and a matrix containing mullite and alumina.

Example 11

A CMC was prepared in a manner similar to that of Example 1, except that 23 g of a commercially available mullite powder (product name: KM101, manufactured by KCM Corporation) and 70 g of the alumina powder were used. The CMC was formed of a continuous mixed alumina-mullite fiber cloth and a matrix containing mullite and alumina.

Example 12

A CMC was prepared in a manner similar to that of Example 1, except that 23 g of a commercially available mullite powder (product name: Fused Mullite 70M 100F, manufactured by Pacific Rundum Co., Ltd., average particle size: 3.6 μm, BET specific surface area: 0.85 m²/g) and 70 g of the alumina powder were used. The CMC was formed of a continuous mixed alumina-mullite fiber cloth and a matrix containing mullite and alumina.

In the CMC of this Example, the pre-high-temperature-exposure tensile strength was 119 MPa, the post-high-temperature-exposure tensile strength was 106 MPa, and thus, the strength retention ratio was 89%.

Example 13

A CMC was prepared in a manner similar to that of Example 1, except that 23 g of a commercially available mullite powder (product name: Fused Mullite 70M 325F, manufactured by Pacific Rundum Co., Ltd., average particle size: 9.5 $\mu$m, BET specific surface area: 0.17 m$^2$/g) and 70 g of the alumina powder were used. The CMC was formed of a continuous mixed alumina-mullite fiber cloth and a matrix containing mullite and alumina.

In the CMC of this Example, the pre-high-temperature-exposure tensile strength was 107 MPa, the post-high-temperature-exposure tensile strength was 100 MPa, and thus, the strength retention ratio was 93%.

The entire contents of the specification, claims, drawings and abstract of Japanese Patent Application No. 2022-099341, filed on June 21, 2022, are cited and incorporated herein as a disclosure of the specification of the present disclosure.

**Claims**

1. A ceramic matrix composite comprising:

   a ceramic matrix comprising an aluminum-containing composite oxide and an oxide that has a composition different from the composition of the composite oxide; and
   a continuous ceramic fiber.

2. The ceramic matrix composite according to claim 1, wherein the composite oxide is at least one selected from the group of spinel, mullite and YAG.

3. The ceramic matrix composite according to claim 1 or 2, wherein the oxide comprises alumina.

4. The ceramic matrix composite according to any one of claims 1 to 3, wherein a content of the composite oxide in the ceramic matrix is 0.5 mass% or greater and 80 mass% or less.

5. The ceramic matrix composite according to any one of claims 1 to 4, wherein the continuous ceramic fiber is at least one selected from the group of continuous alumina fibers, continuous mullite fibers and continuous mixed alumina-mullite fibers.

6. The ceramic matrix composite according to any one of claims 1 to 5, wherein a fiber volume fraction is 30 vol.% or greater and 60 vol.% or less.

7. The ceramic matrix composite according to any one of claims 1 to 6, wherein a measured density is 2.0 g/cm$^3$ or greater and 3.2 g/cm$^3$ or less.

8. A method for producing the ceramic matrix composite according to any one of claims 1 to 7, the method comprising the steps of:

   preparing a mixture by mixing a slurry with the continuous ceramic fiber, the slurry including an aluminum-containing composite oxide source and an oxide source that has a composition different from the composition of the composite oxide source;
   solidifying the mixture to form a green body; and
   firing the green body.

9. The method according to claim 8, wherein a ratio of an average particle size of the composite oxide source to an average particle size of the oxide source is 0.01 or greater and 1.2 or less.

10. The method according to claim 8 or 9, wherein the composite oxide source is at least one selected from the group of spinel, mullite and YAG.

11. A component comprising the ceramic matrix composite according to any one of claims 1 to 7.

# FIG. 1

## INTERNATIONAL SEARCH REPORT

International application No.

**PCT/JP2023/022159**

### A. CLASSIFICATION OF SUBJECT MATTER

***C04B 35/80***(2006.01)i
FI:  C04B35/80 300

According to International Patent Classification (IPC) or to both national classification and IPC

### B. FIELDS SEARCHED

Minimum documentation searched (classification system followed by classification symbols)

C04B35/80

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2020/203484 A1 (TOSOH CORPORATION) 08 October 2020 (2020-10-08) paragraphs [0065]-[0067], [0082] | 1-8, 10-11 |
| Y | | 9 |
| X | JP 2008-24585 A (THE BOEING COMPANY) 07 February 2008 (2008-02-07) paragraphs [0013]-[0014], [0020], [0026], [0035] | 1-5, 8-11 |
| Y | | 9 |
| A | JP 2001-89254 A (NICHIAS CORP) 03 April 2001 (2001-04-03) entire text | 1-11 |
| A | US 2008/0176020 A1 (VANN, Heng) 24 July 2008 (2008-07-24) whole document, whole drawing | 1-11 |
| A | CN 110776327 A (XIAN GOLDEN MOUNTAIN CERAM COMPOSITES CO LTD) 11 February 2020 (2020-02-11) entire text | 1-11 |

☑ Further documents are listed in the continuation of Box C.   ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **02 August 2023** | **22 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

<table>
<tr><td colspan="2"><strong>INTERNATIONAL SEARCH REPORT</strong></td><td>International application No.<br><strong>PCT/JP2023/022159</strong></td></tr>
</table>

**C.      DOCUMENTS CONSIDERED TO BE RELEVANT**

| Category* | Citation of document, with indication, where appropriate, of the relevant passages | Relevant to claim No. |
|---|---|---|
| P, A | WO 2022/138664 A1 (TOSOH CORPORATION) 30 June 2022 (2022-06-30)<br>entire text, all drawings | 1-11 |

Form PCT/ISA/210 (second sheet) (January 2015)

<div align="center">

**INTERNATIONAL SEARCH REPORT**
Information on patent family members

</div>

| International application No. |
| --- |
| **PCT/JP2023/022159** |

| Patent document cited in search report | | | Publication date (day/month/year) | Patent family member(s) | | | Publication date (day/month/year) |
|---|---|---|---|---|---|---|---|
| WO | 2020/203484 | A1 | 08 October 2020 | US 2022/0185742 A1 paragraphs [0106]-[0109], [0128] EP 3950640 A1 CN 113631532 A | | | |
| JP | 2008-24585 | A | 07 February 2008 | US 2010/0081556 A1 paragraphs [0015]-[0016], [0025], [0032], [0041] EP 1880984 A2 CN 101108774 A | | | |
| JP | 2001-89254 | A | 03 April 2001 | (Family: none) | | | |
| US | 2008/0176020 | A1 | 24 July 2008 | EP 2109537 A1 | | | |
| CN | 110776327 | A | 11 February 2020 | (Family: none) | | | |
| WO | 2022/138664 | A1 | 30 June 2022 | JP 2022-103110 A | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022071218 A
- WO 2021193817 A
- JP 2022099341 A

**Non-patent literature cited in the description**

- *J. Euro. Ceram. Soc.*, 2004, vol. 24, 565-578